# EUROPÄISCHE PATENTSCHRIFT

(11) **EP 0 384 966 B1**
(45) Veröffentlichungstag und Bekanntmachung des Hinweises auf die Patenterteilung: **21.07.1993**
(21) Anmeldenummer: 89121070.0
(22) Anmeldetag: 14.11.1989
(51) Int. Cl.: F16F 13/00, F16F 9/34

(54) **Motorlager**
Engine mounting
Support de moteur

(30) Priorität: 01.03.1989 DE 3906373
(43) Veröffentlichungstag der Anmeldung: 05.09.1990
(73) Patentinhaber: Firma Carl Freudenberg, 69469 Weinheim (DE)
(72) Erfinder: Hamaekers, Arno, D-6946 Gorxheimertal (DE); Simuttis, Arnold, Dr., D-6550 Bad Kreuznach (DE)

(56) Entgegenhaltungen:
- EP-A- 0 098 128
- EP-A- 0 147 242
- EP-A- 0 154 268
- EP-A- 0 235 540
- DE-A- 3 245 653
- DE-A- 3 802 105
- FR-A- 2 576 994
- US-A- 4 781 361

## Beschreibung

Die Erfindung betrifft ein Motorlager nach dem Oberbegriff von Anspruch 1.

Ein solches Motorlager ist beispielsweise aus der DE-C- 29 05 091 bekannt. Es bewirkt bei einer Verwendung in nach außen offenen Motorräumen eine ausgezeichnete Isolierung akustisch wirksamer, hochfrequenter Schwingungen sowie eine gute Dämpfung fahrbahnerregter, tieffrequenter Schwingungen. Die in dieser Hinsicht guten Eigenschaften gehen bei einer Verwendung in schalldicht gekapselten Motorräumen von Kraftfahrzeugen leider überwiegend verloren.

Aus der DE-A- 32 45 653 ist ein Zweikammermotorlager mit hydraulischer Dämpfung bekannt, das zwei flüssigkeitsgefüllte Kammern umfaßt, die über eine mit einer Drosselöffnung versehene Zwischenplatte, die starr zwischen den beiden Arbeitskammern angeordnet ist, flüssigkeitsleitend miteinander in Verbindung stehen. Zur Isolierung akustisch störender Schwingungen ist eine Ausgleichskammer außerhalb der oberen, motorseitigen Flüssigkeitskammer angeordnet, die miteinander flüssigkeitsleitend verbunden sind.

Der Erfindung liegt die Aufgabe zugrunde, ein solches Motorlager derart weiterzuentwickeln, daß sich auch bei einer Verwendung in schalldicht nach außen abgeschlossenen Motorräumen von Kraftfahrzeugen eine gute Dämpfung fahrbahnerregter Schwingungen ergibt sowie dauerhaft eine gute Isolierung der vom Motor erregten, akustisch wirksamen, hochfrequenten Schwingungen.

Diese Aufgabe wird erfindungsgemäß bei einem Motorlager der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Motorlager sind die Arbeitsräume durch eine in Richtung der eingeleiteten Schwingungen zumindest teilweise nachgiebige Trennwand voneinander getrennt, wobei zusätzlich zu den Arbeitsräumen ein Ausgleichsraum zur Kompensation wärmebedingter Volumenvergrößerung der in den Arbeitsräumen enthaltenen Flüssigkeit vorgesehen ist und wobei der Ausgleichsraum durch eine flexible und im wesentlichen nicht elastische Wandung zur drucklosen Aufnahme zusätzlicher Flüssigkeitsvolumina geeignet und durch wenigstens eine Ausgleichsöffnung mit wenigstens einem Arbeitsraum verbunden ist, wobei die Ausgleichsöffnung einen Strömungswiderstand aufweist, der wesentlich größer ist als derjenige der Dämpfungsöffnung.

Bei dieser Ausbildung geht die Erfindung aus von der Erkenntnis, daß sich bei der Verwendung eines Motorlagers in dem schallgekapselten Motorraum eines Kraftfahrzeuges zwangsläufig eine Erwärmung ergibt, die Temperaturen von 140°C erreichen kann. Die Volumenvergrößerung der in den Arbeitsräumen enthaltenen Flüssigkeit ist demgemäß erheblich und wird bei dem erfindungsgemäßen Motorlager über die Ausgleichsöffnung kompensiert. Der der Auslegung des Motorlagers ursprünglich zugrunde gelegte Innendruck bleibt dadurch stets erhalten und sowohl hinsichtlich des Isolierverhaltens als auch hinsichtlich der Dämpfungswirksamkeit ergibt sich keinerlei Veränderung. Auch vermag die durch die Erwärmung bedingte Volumenvergrößerung der Flüssigkeit die Entstehung von Vorspannungen in den elastischen Begrenzungswänden der Arbeitsräume nicht mehr zu bewirken, wodurch sich eine Verbesserung der Gebrauchsdauer ergibt.

Durch den erheblichen Strömungswiderstand der Ausgleichsöffnung vermögen die durch die Einleitung von Schwingungen in den Arbeitsräumen verursachten Druckveränderungen keine funktionsbeeinträchtigende Relativverlagerung von Flüssigkeitsbestandteilen in der Ausgleichsöffnung zu bewirken. Bei der Auslegung des Motorlagers können daher die bekannten Auslegungsregeln zur Anwendung gelangen. Auch können die übrigen Bestandteile des erfindungsgemäßen Motorlagers irgendeiner der bekannten Bauformen entsprechen. Es ist sowohl möglich, die Dämpfungsöffnung kanal- oder blendenartig zu gestalten als auch Wandungsbestandteile beider Arbeitsräume durch eine Brücke zu verbinden. Auch ist es möglich, aktive oder passive Schwingungsentkoppler zu verwenden.

Die Ausgleichsöffnung kann durch eine Kapillaröffnung gebildet und beispielsweise von einem Haarröhrchen umschlossen sein. Die Übertragung von Druckimpulsen durch die Ausgleichsöffnung hindurch ist in diesem Falle völlig ausgeschlossen.

Offenporige Dämpfungskörper zeichnen sich dem gegenüber durch eine größere Robustheit in mechanischer Hinsicht aus. Sie können einstückig ausgebildet sein oder aus mehreren, zusammengepreßten Partikeln bestehen, beispielsweise aus Partikeln, welche von kugel- und/oder faserförmiger Gestalt sind. Neben der Verwendung von metallischen und künstlichen Werkstoffen ist die Verwendung natürlicher Werkstoffe problemlos möglich, beispielsweise die Verwendung von mineralischen Werkstoffen. Auch die Verwendung von Druckbegrenzungsventilen ist möglich, wobei darauf zu achten ist, daß die erforderliche Durchlässigkeit sowohl in Richtung des Ausgleichsraumes als auch in Richtung des zugehörigen Arbeitsraumes gewährleistet sein muß.

Der Gegenstand der Erfindung wird nachfolgend durch die in der Anlage beigefügte Zeichnung weiter verdeutlicht. Es zeigen:
Figur 1
   Eine beispielhafte Ausführung des erfindungsgemäßen Motorlagers in längsgeschnittener Darstellung.
Figuren 2 und 3
   Zwei verschiedene Ausführungen von Dämpfungskörpern zur Verwendung in der Ausgleichsöffnung des erfindungsgemäßen Motorlagers.
Figur 4
   Eine Anordnung von Druckbegrenzungsventilen in zwei voneinander getrennten Ausgleichsöffnungen des erfindungsgemäßen Motorlagers.

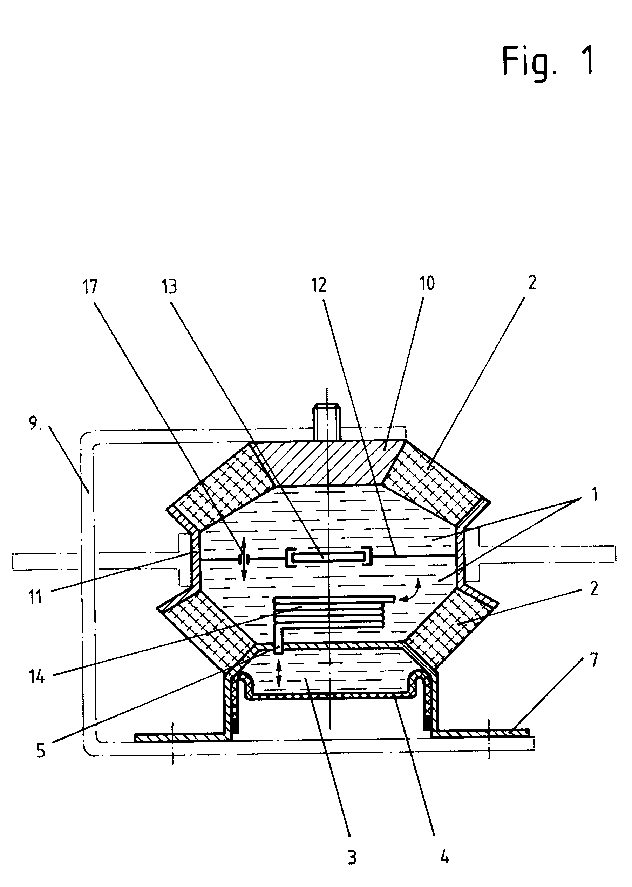

Das in Figur 1 gezeigte Motorlager gehört zum Zweikammertyp, bei dem beide Arbeitsräume 1 in Teilbereichen durch elastisch nachgiebige Wandungen 2 begrenzt sind. Die elastisch nachgiebigen Wandungen 2 bestehen aus gummielastischem Werkstoff und sind hohlkegelig gestaltet. Sie dienen zugleich der Übertragung von Kräften zwischen dem Auflager 7 und dem Traglager 10.

Untereinander sind die elastisch nachgiebigen Wandungen 2 durch einen metallischen Ring 11 verbunden, der zugleich der mechanischen Festlegung der die Arbeitsräume 1 voneinander trennenden, flüssigkeitsundurchlässigen Trennwand 12 dient. Diese umschließt im mittleren Bereich eine zwischen Anschlägen axial verschiebbare Scheibe 13, welche als Entkoppler in bezug auf die Einleitung von akustisch wirksamen, hochfrequenten Schwingungen dient. Diese haben gewöhnlich eine Amplitude von max. 0,2 mm. Zusätzlich umschließt die Trennwand 12 die Dämpfungsöffnung 17. Diese wird durch eine einfache Bohrung gebildet und ist blendenartig umschlossen.

Das Auflager 7 umschließt im mittleren Bereich eine Eintiefung, die gemeinsam mit einer flexiblen und im wesentlichen nichtelastischen Wandung 4 den Ausgleichsraum 3 begrenzt. Dieser ist zur drucklosen Aufnahme zusätzlicher Flüssigkeitsvolumina geeignet und durch die Ausgleichsöffnung 5 mit dem unteren Arbeitsraum 1 verbunden. Die Ausgleichsöffnung 5 wird im wesentlichen durch ein Kapillarrohr 14 umschlossen, welches schraubenförmig gewunden und überwiegend in dem zugehörigen Arbeitsraum 1 enthalten ist. Eine Anbringung in dem Ausgleichsraum 3 oder in dem das Auflager 7 bildenden, metallischen Werkstoffkörper ist ebenfalls möglich.

Die die beiden Arbeitsräume 1 begrenzenden, elastisch nachgiebigen Wandungen 2 sind einander in einer Reihenschaltung zugeordnet. Die Ausführung entspricht der vorstehend beschriebenen. Daneben ist es jedoch ebenfalls möglich, die Arbeitsräume begrenzende, in der gleichen Richtung bewegliche Wandungsbestandteile beider Arbeitsräume in starrer Weise zu verbinden, beispielsweise durch Verwendung eines Brückenteiles 9, welches in Form von gestrichelten Linien angedeutet ist. Der Gegenstand der vorliegenden Erfindung wird hierdurch nicht berührt.

Von großer Bedeutung ist es jedoch, daß die Ausgleichsöffnung 5 einen so großen Strömungswiderstand aufweist, daß die durch die Einleitung von Schwingungen in das erfindungsgemäße Motorlager in den Arbeitsräumen 1 verursachten Druckveränderungen keine nennenswerte Relativverlagerung von in der Ausgleichsöffnung enthaltenen Flüssigkeitsbestandteilen zu verursachen vermögen. Die Bedingung läßt sich indessen auf der Grundlage einfacher Versuche leicht erfüllen bzw. durch die Verwendung von einer oder mehreren Ausgleichsöffnungen, welche von kapillaraktiver Enge sind. Bei der Ausführung nach Figur 1 ist nur eine einzige Kapillaröffnung vorhanden. Sie wird von einem Kapillarröhrchen 14 umschlossen.

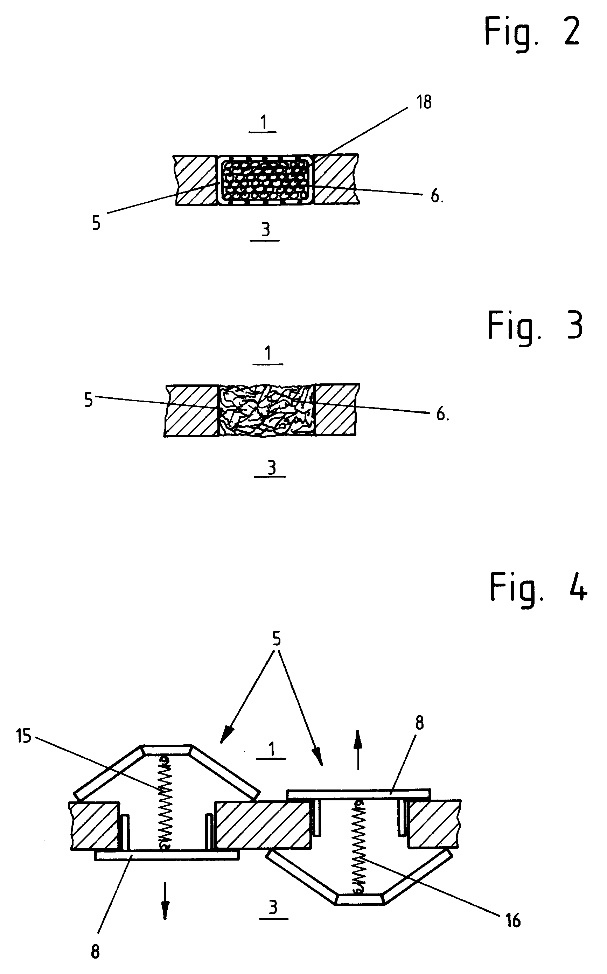

Figur 2 zeigt einen in eine andere Ausführung der Ausgleichsöffnung 5 eingesetzten Dämpfungskörper 6, der aus in einem Siebkäfig zusammengepreßten Partikeln 18 besteht. Diese sind von kugelförmiger Gestalt und bestehen aus Metall.

Figur 3 zeigt einen Dämpfungskörper 6 ähnlich der in Figur 2 gezeigten Ausführung. Er ist jedoch einstückig ausgebildet und besteht aus untereinander verklebten oder verschweißten Partikeln 18, beispielsweise aus solchen in Gestalt von dünnen Drähten.

Figur 4 nimmt bezug auf eine Ausführung, bei der zwei nebeneinander liegende Ausgleichsöffnungen in der Trennwand zwischen dem Ausgleichsraum 3 und dem benachbarten Arbeitsraum 1 vorhanden sind. Die im linken Teil der Darstellung wiedergegebene Ausgleichsöffnung 5 ist in Richtung des Ausgleichsraumes 3 durchlässig, wenn ein bestimmter Mindestdruck im angrenzenden Arbeitsraum 1 überschritten ist. Dieser ist durch die Zugkraft der Schraubenfeder 15 definiert.

Im rechten Teil der Darstellung ist ein Druckbegrenzungsventil 8 vorgesehen, welches aus der Richtung des Ausgleichsraumes 3 in Richtung des Arbeitsraumes 1 durchlässig ist, wenn in dem Arbeitsraum 1 die Gefahr der Entstehung eines Unterdruckes gegeben ist. Der entsprechende Wert ist durch die Schraubenfeder 16 definiert.

## Patentansprüche

1. Motorlager mit hydraulischer Dämpfung, umfassend zwei getrennte Arbeitsräume (1), die mit einer Flüssigkeit gefüllt und in wenigstens einem Teilbereich durch eine elastisch nachgiebige Wandung (2) begrenzt und durch eine Dämpfungsöffnung (17) verbunden sind, wobei die Arbeitsräume (1) durch eine in Richtung der eingeleiteten Schwingungen zumindest teilweise nachgiebige Trennwand (12) voneinander getrennt sind, dadurch gekennzeichnet, daß zusätzlich zu den Arbeitsräumen (1) ein Ausgleichsraum (3) vorgesehen ist, daß der Ausgleichsraum (3) zur Kompensation wärmebedingter Volumenvergrößerung der in den Arbeitsräumen (1) enthaltenen Flüssigkeit vorgesehen ist, daß der Ausgleichsraum (3) durch eine flexible und im wesentlichen nicht elastische Wandung (4) zur drucklosen Aufnahme zusätzlicher Flüssigkeitsvolumina geeignet und durch wenigstens eine Ausgleichsöffnung (5) mit wenigstens einem Arbeitsraum (1) verbunden ist und daß die Ausgleichsöffnung (5) einen Strömungswiderstand aufweist, der wesentlich größer ist als derjenige der Dämpfungsöffnung (17).

2. Motorlager nach Anspruch 1, dadurch gekennzeichnet, daß die Ausgleichsöffnung als Kapillaröffnung gestaltet ist.

3. Motorlager nach Anspruch 1, dadurch gekennzeichnet, daß die Ausgleichsöffnung (5) wenigstens einen offenporigen Dämpfungskörper (6) enthält.

4. Motorlager nach Anspruch 3, dadurch gekennzeichnet, daß der Dämpfungskörper (6) einstückig ausgebildet ist.

5. Motorlager nach Anspruch 3, dadurch gekennzeichnet, daß der Dämpfungskörper (6) aus mehreren zusammengepreßten Partikeln (7) besteht.

6. Motorlager nach Anspruch 5, dadurch gekennzeichnet, daß die Partikel (7) von kugel- und/oder faserförmiger Gestalt sind.

7. Motorlager nach Anspruch 3 bis 6, dadurch gekennzeichnet, daß der Dämpfungskörper (6) aus einem metallischen, künstlichen und/oder natürlichen Werkstoff besteht.

8. Motorlager nach Anspruch 1, dadurch gekennzeichnet, daß die Ausleichsöffnung (5) mit einem Druckbegrenzungsventil (8) versehen ist.

## Claims

1. An engine support with hydraulic damping, comprising two separate working spaces (1), which are filled with a fluid and are bounded in at least one partial region by an elastically flexible wall (2) and are connected by a damping opening (17), the working spaces (1) being separated from one another by a separating wall (12) at least partially flexible in the direction of the vibrations introduced, characterised in that a compensation space (3) is provided in addition to the working spaces (1), in that the compensation space (3) is provided to compensate for a thermally induced increase in volume of the fluid contained in the working spaces (1), in that the compensation space (3) is suitable for the unpressurised accommodation of additional fluid volumes by means of a flexible and essentially non-elastic wall (4) and is connected to at least one working space (1) by at least one compensation opening (5) and in that the compensation opening (5) has a flow resistance which is substantially larger than that of the damping opening (17).

2. An engine support according to claim 1, characterised in that the compensation opening is designed as a capillary opening.

3. An engine support according to claim 1, characterised in that the compensation opening (5) contains at least one open-pore damping body (6).

4. An engine support according to claim 3, characterised in that the damping body (6) is configured in one piece.

5. An engine support according to claim 3, characterised in that the damping body (6) consists of a plurality of particles (7) pressed together.

6. An engine support according to claim 5, characterised in that the particles (7) are of spherical and/or fibre-shaped design.

7. An engine support according to any of claims 3 to 6, characterised in that the damping body (6) consists of a metallic, plastic and/or natural material.

8. An engine support according to claim 1, characterised in that the compensation opening (5) is provided with a pressure limiting valve (8).

## Revendications

1. Support de moteur avec amortissement hydraulique, comportant deux chambres de travail (1) séparées, qui sont remplies d'un liquide et qui sont délimitées au moins dans une zone partielle par une paroi (2) élastiquement flexible et qui sont reliées par un orifice d'amortissement (17), les chambres de travail (1) étant séparées l'une de l'autre par une paroi séparatrice (12), au moins partiellement flexible dans la direction des oscillations appliquées, caractérisé en ce qu'il est prévu en addition aux chambres de travail (1) une chambre de compensation (3), en ce que la chambre de compensation (3) est prévue pour une compensation d'une augmentation de volume, résultant d'un échauffement du liquide contenu dans les chambres de travail (1), en ce que la chambre de compensation (3) est appropriée, au moins d'une paroi (4) flexible et dans l'essentiel non élastique, pour recevoir sans pression un volume additionnel de liquide et reliée, par au moins un orifice de compensation (5), avec au moins une chambre de travail (1), et en ce que l'orifice de compensation (5) a une résistance à l'écoulement qui est sensiblement plus grande que celle de l'orifice d'amortissement (17).

2. Support de moteur selon la revendication 1, caractérisé en ce que l'orifice de compensation est agencé en forme d'orifice capillaire.

3. Support de moteur selon la revendication 1, caractérisé en ce que l'orifice de compensation (5) contient au moins un corps d'amortissement (6) à pores ouverts.

4. Support de moteur selon la revendication 3, caractérisé en ce que le corps d'amortissement (6) est réalisé d'une seule pièce.

5. Support de moteur selon la revendication 3, caractérisé en ce que le corps d'amortissement (6) se compose de plusieurs particules (7) agglomérées par compression.

6. Support de moteur selon la revendication 5, caractérisé en ce que les particules (7) ont la forme de sphères et/ou de fibres.

7. Support de moteur selon une des revendications 3 à 6, caractérisé en ce que le corps d'amortissement (6) se compose d'un matériau métallique, synthétique et/ou naturel.

8. Support de moteur selon la revendication 1, caractérisé en ce que l'orifice de compensation (5) est pourvu d'une soupape (8) de limitation de pression.
